(19) Europäisches Patentamt
European Patent Office
Office européen des brevets

(11) **EP 4 257 371 B1**

(12) **EUROPEAN PATENT SPECIFICATION**

(45) Date of publication and mention
of the grant of the patent:
**30.07.2025 Bulletin 2025/31**

(21) Application number: **21903052.5**

(22) Date of filing: **29.10.2021**

(51) International Patent Classification (IPC):
**B60C 9/00** (2006.01)     **B60C 9/08** (2006.01)
**B60C 9/22** (2006.01)     **B60C 9/20** (2006.01)
**B60C 9/04** (2006.01)

(52) Cooperative Patent Classification (CPC):
**B60C 9/0042; B60C 9/005; B60C 9/08;**
**B60C 9/2009; B60C 9/2204;** B60C 2009/0078;
B60C 2009/0085; B60C 2009/0092;
B60C 2009/0425; B60C 2009/0441;
B60C 2009/0458; B60C 2009/0466;
B60C 2009/2209; B60C 2009/2214;
B60C 2009/2257;                          (Cont.)

(86) International application number:
**PCT/JP2021/039951**

(87) International publication number:
**WO 2022/123948 (16.06.2022 Gazette 2022/24)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.12.2020 JP 2020202640**

(43) Date of publication of application:
**11.10.2023 Bulletin 2023/41**

(73) Proprietor: **The Yokohama Rubber Co., Ltd.
Hiratsuka-shi, Kanagawa 254-8601 (JP)**

(72) Inventors:
• **MATSUMOTO, Sakiko
Hiratsuka-shi
254-8601 Kanagawa (JP)**

• **CHAYA, Takamitsu
Hiratsuka-shi
254-8601 Kanagawa (JP)**

(74) Representative: **Dilg, Haeusler, Schindelmann
Patentanwaltsgesellschaft mbH
Leonrodstraße 58
80636 München (DE)**

(56) References cited:
WO-A1-2014/167937     WO-A1-2020/179921
JP-A- 2009 274 683     JP-A- 2010 179 689
JP-A- 2014 108 675     JP-A- 2016 060 343
JP-A- 2016 079 548     JP-A- 2019 156 070
US-A1- 2016 297 245     US-A1- 2020 164 689

(52) Cooperative Patent Classification (CPC): (Cont.)
B60C 2009/2261; B60C 2009/2276;
B60C 2009/228; B60C 2009/2285; Y02T 10/86

**Description**

Technical Field

The present invention relates to a pneumatic tire including a carcass layer formed of an organic fiber cord and a belt cover layer formed of a composite cord.

Background Art

In a tire that exhibits excellent running performance during high-speed travel (a so-called high performance tire), a rayon fiber cord having high rigidity may be used in a carcass layer in order to ensure steering stability during high-speed travel (for example, see Patent Document JP 2017-031381 A). In addition, in order to ensure high-speed durability in a pneumatic tire, a composite cord that is three-twisted, being obtained by intertwining two yarns made of aramid fiber and one yarn made of nylon fiber, may be used in a belt cover layer (see, for example, Patent Document JP 2009-132329 A). On the other hand, in recent years, there has been an increasing demand for tire weight reduction and rolling resistance reduction in consideration of environmental impact. However, in the carcass layer and belt cover layer described above, reducing tire weight and reducing rolling resistance has tended to be difficult.

For example, when, in the belt cover layer, instead of the composite cord described above, a composite cord that is two-twisted, being obtained by intertwining one yarn made of aramid fiber and one yarn made of nylon fiber, is used, although tire weight can be reduced and rolling resistance can be reduced, toughness (the product of strength and elongation at break) cannot be ensured, and thus there is a concern that shock burst resistance is reduced. Shock burst resistance is the durability of a tire against damage caused by a large shock received during travel that causes the carcass to be broken (shock burst), and is indicated, for example, by a plunger energy test (a test for measuring breakage energy when a tire is broken by pressing a plunger with a predetermined size into a central portion of the tread). Therefore, in a tire including a carcass layer formed of an organic fiber cord and a belt cover layer formed of a composite cord, it is necessary to reduce rolling resistance and satisfactorily ensure shock burst resistance while improving steering stability during high-speed travel.

Other known pneumatic tires are disclosed in the documents JP 2009-274683 A and JP2019-156070 A.

Summary of Invention

Technical Problem

An object of the present invention is to provide a pneumatic tire that can provide reduced rolling resistance and ensured shock burst resistance while improving steering stability during high-speed travel, these being provided in a highly compatible manner.

Solution to Problem

A pneumatic tire according to an embodiment of the present invention for achieving the object described above includes a tread portion extending in a tire circumferential direction and having an annular shape, a pair of sidewall portions respectively disposed on both sides of the tread portion, and a pair of bead portions each disposed on an inner side of the sidewall portions in a tire radial direction, and includes at least one carcass layer mounted between the pair of bead portions, a plurality of belt layers disposed on an outer circumferential side of the carcass layer in the tread portion, and a belt cover layer disposed on an outer circumferential side of the belt layer, the carcass layer being constituted by a carcass cord made of polyester fiber, an elongation at break of the carcass cord being from 20% to 30%, and a product $A = D \times Ec$ of a fineness based on corrected mass D (unit: dtex/cord) per carcass cord and a count Ec (unit: cords/50 mm) of the carcass cord per 50 mm in a direction orthogonal to an extension direction of the carcass cord being from $1.8 \times 10^5$ dtex/50 mm to $3.0 \times 10^5$ dtex/50 mm, and the belt cover layer being constituted by a composite cord obtained by intertwining a yarn made of aramid fiber and a yarn made of an other organic fiber, a cord diameter per composite cord being 0.75 mm or less, tensile strength per width of 50 mm at break of the composite cord being 14 kN/50 mm or more, and an elastic modulus per width of 50 mm at 2 to 5% elongation of the composite cord being from 1.7 kN/(50 mm·%) to 2.3 kN/(50 mm·%).

Advantageous Effects of Invention

In the present invention, since the carcass cord constituting the carcass layer is a polyester fiber cord having the physical properties described above, shock burst resistance can be improved while ensuring good high-speed steering stability similar to that of the case of using a rayon fiber cord. Specifically, since the elongation at break of the carcass cord is in the range described above, the rigidity of the carcass cord can be appropriately ensured, and high-speed steering stability can be satisfactorily achieved. Further, since the carcass cord has the elongation at break described above, the carcass cord easily follows local deformation, deformation during a plunger energy test (when the carcass cord is pressed by a plunger) can be sufficiently tolerated, and breakage energy can be improved. In other words, during travel, breakage durability of the tread portion against incoming protrusions is improved, and thus shock burst resistance can be improved. Furthermore, the above-described product A, that is, the fineness of the carcass cord per unit width, is within the range described above. Accordingly, durability and braking performance can be provided in a compatible manner, which is consequently advantageous for improving shock burst resistance and high-speed steering stability.

On the other hand, since the belt cover layer is constituted by the composite cord described above, it is possible to reduce rolling resistance and ensure shock burst resistance while improving steering stability during high-speed travel. Specifically, since the cord diameter of the composite cord is sufficiently small, tire weight can be reduced and the rolling resistance can be reduced. In addition, since the tensile strength at break of the composite cord is sufficiently high, the shock burst resistance can be ensured. Furthermore, since the elastic modulus of the composite cord at 2 to 5% elongation is in an appropriate range, suitable rigidity as the belt cover layer can be ensured, and an appropriate hoop effect can be ensured, thus, the steering stability during high-speed travel can be improved, the rolling resistance can be reduced, and the shock burst resistance can be ensured.

The pneumatic tire of the present invention using the carcass layer and belt cover layer described above in combination can provide the plurality of tire performances (steering stability during high-speed travel, low rolling resistance performance, and shock burst resistance) described above in a well-balanced and highly compatible manner, by cooperation of the carcass layer and the belt cover layer. Note that "elongation at break" of the carcass cord (polyester fiber cord) is an elongation ratio (%) of sample cords at breaking of the cords measured by conducting a tensile test in accordance with JIS L1017 "Test methods for chemical fiber tire cords" with a length of specimen between grips being 250 mm and a tensile speed being $300 \pm 20$ mm/minute. The "tensile strength per width of 50 mm at break" of the composite cord is a value obtained by sampling a cord (sample cord) from the tire, performing a tensile test immediately after the sampling under conditions of an initial load of 0.45 mN/dtex, a length of specimen between grips of 250 mm, and a tensile speed of $300 \pm 20$ mm/min, and multiplying a strength measured at break of the sample cord by the number of cords included in the tire per width of 50 mm. The "elastic modulus per width of 50 mm at 2 to 5% elongation" of the composite cord is a value obtained by sampling a cord (sample cord) from the tire, performing a tensile test immediately after the sampling under conditions of an initial load of 0.45 mN/dtex, a length of specimen between grips of 250 mm, and a tensile speed of $300 \pm 20$ mm/min, creating a graph of tensile stress against cord elongation (%), and multiplying an elastic modulus obtained from an inclination in a range of the elongation from 2 to 5% of the graph by the number of cords included in the tire per width of 50 mm.

In an embodiment of the present invention, a twist coefficient K of the carcass cord represented by the following Formula (1) is preferably 2000 or more. This achieves satisfactory cord fatigue and can ensure excellent durability.

$$ K = T \times D^{1/2} \cdots (1) $$

(where T is a cable twist count (turns/10 cm) of the carcass cord and D is a total fineness (dtex) of the carcass cord)

In an embodiment of the present invention, a region of 70% of a ground contact width centered on a tire equator is a center region, each region on an outer side of the center region in a tire width direction is a shoulder region, and a ratio Ce/Sh of cord tension Ce in the tire of the composite cord disposed in the center region and cord tension Sh in the tire of the composite cord disposed in the shoulder region is preferably 1.0 or more and 2.0 or less. Setting the tension for each portion in the tire width direction in this way can reduce heat generation and improve tire durability.

In an embodiment of the present invention, an elongation at break of the composite cord is preferably 7% or more. Appropriately increasing the elongation at break of the composite cord as described above is advantageous for ensuring the shock burst resistance. Note that the "elongation at break" of the composite cord is an elongation ratio (%) of sample cords at break of the cords by conducting a tensile test in accordance with JIS L1017 "Test methods for chemical fiber tire cords" with a length of specimen between grips being 250 mm and a tensile speed being $300 \pm 20$ mm/minute.

In an embodiment of the present invention, preferably, the composite cord has a two-twisted structure formed of one aramid fiber and one nylon fiber, and a total fineness is from 2000 dtex to 3500 dtex. This makes the structure of the composite cord satisfactory, and weight reduction can be achieved while satisfactorily maintaining the hoop effect and fatigue resistance by the cord.

Note that in the present invention, the "ground contact width" is the distance between respective ground contact edges on both sides in the tire width direction. "Ground contact edge" refers to end portions of a ground contact region in a tire axial direction. The ground contact region is formed when a regular load is applied to the tire mounted on a regular rim, inflated to a regular internal pressure, and placed vertically on a flat surface. "Regular rim" refers to a rim defined by a standard for each tire according to a system of standards that includes standards with which tires comply, and is "standard rim" defined by Japan Automobile Tyre Manufacturers Association (JATMA), "Design Rim" defined by The Tire and Rim Association, Inc. (TRA), or "Measuring Rim" defined by European Tire and Rim Technical Organization (ETRTO), for example. In the system of standards, including standards with which tires comply, "regular internal pressure" is air pressure defined by each of the standards for each tire and refers to "maximum air pressure" in the case of JATMA, the maximum value being listed in the table "TIRE LOAD LIMITS AT VARIOUS COLD INFLATION PRESSURES" in the case of TRA, or "INFLATION PRESSURE" in the case of ETRTO. However, "regular internal pressure" is 180 kPa in a case where a tire is for a passenger vehicle. "Regular load" is a load defined by a standard for each tire according to a system of standards that includes standards with which tires comply, and refers to a "maximum load capacity" in the case of JATMA, the maximum value being listed in the table of "TIRE LOAD LIMITS AT VARIOUS COLD INFLATION PRESSURES" in the case of TRA, or "LOAD CAPACITY" in the case of ETRTO. "Regular load" corresponds to 88% of the loads described above in a case where a tire is for a passenger vehicle.

Brief Description of Drawings

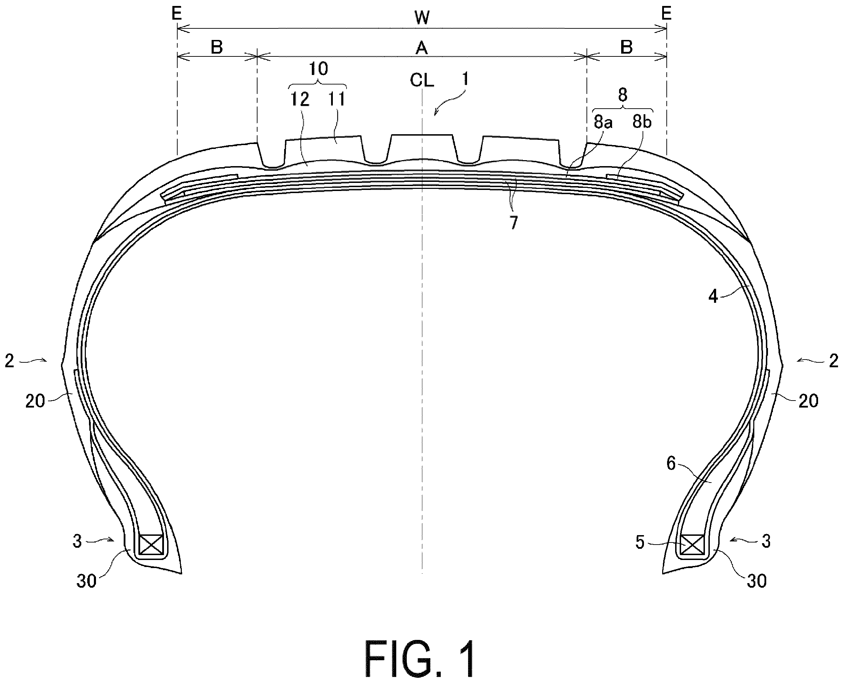

FIG. 1 is a meridian cross-sectional view illustrating a pneumatic tire according to an embodiment of the present invention.

Description of Embodiments

Configurations of embodiments of the present invention will be described in detail below with reference to the accompanying drawings.
As illustrated in FIG. 1, a pneumatic tire of an embodiment of the present invention includes a tread portion 1, a pair of sidewall portions 2 respectively disposed on both sides of the tread portion 1, and a pair of bead portions 3 disposed in the sidewall portions 2 on an inner side in a tire radial direction. Note that "CL" in FIG. 1 denotes a tire equator. Although not illustrated in FIG. 1, which is a meridian cross-sectional view, the tread portion 1, the sidewall portions 2, and the bead portions 3 each extend in a tire circumferential direction to form an annular shape. This forms a toroidal basic structure of the pneumatic tire. Although the description using FIG. 1 is basically based on the illustrated meridian cross-sectional shape, all of the tire components extend in the tire circumferential direction and form the annular shape.
A carcass layer 4 including a plurality of reinforcing cords (hereinafter referred to as carcass cords) extending in the tire radial direction is mounted between the pair of bead portions 3 on the right and left. A bead core 5 is embedded within each of the bead portions, and a bead filler 6 having an approximately triangular cross-sectional shape is disposed on an outer periphery of the bead core 5. The carcass layer 4 is folded back around the bead core 5 from an inner side to an outer side in the tire width direction. Accordingly, the bead core 5 and the bead filler 6 are wrapped by a body portion (a portion extending from the tread portion 1 through each of the sidewall portions 2 to each of the bead portions 3) and a folded back portion (a portion folded back around the bead core 5 of each bead portion 3 to extend toward each sidewall portion 2 side) of the carcass layer 4.
A plurality of belt layers 7 (in the illustrated example, two layers) are embedded on an outer circumferential side of the carcass layer 4 in the tread portion 1. Each of the belt layers 7 includes a plurality of reinforcing cords (hereinafter referred to as belt cords) inclining with respect to the tire circumferential direction, and the belt cords are disposed so as to intersect with one another between the layers. In the belt layers 7, an inclination angle of the belt cord with respect to the tire circumferential direction is set within a range, for example, from 10° to 40°. For example, steel cords are preferably used as the belt cords constituting the belt layer 7.
Further, to improve high-speed durability, a belt cover layer 8 is provided on an outer circumferential side of the belt layers 7. The belt cover layer 8 includes a reinforcing cord (hereinafter referred to as a cover cord) oriented in the tire circumferential direction. In the belt cover layer 8, the angle of the cover cords with respect to the tire circumferential direction is set to, for example, 0° to 5°. As the belt cover layer 8, a full cover layer 8a that covers the entire region of the belt layers 7 in the width direction, and a pair of edge cover layers 8b that locally cover both end portions of the belt layers 7 in the tire width direction, can be provided individually or in combination (in the example illustrated, both of the full cover layer 8a and the edge cover layers 8b are provided). The belt cover layer 8 is, for example, preferably configured such that a strip material made of at least a cover cord covered with coating rubber is wound spirally in the tire circumferential direction, and desirably has, in particular, a jointless structure.
The present invention mainly relates to the cords (the carcass cord and the cover cords) constituting the respective carcass layer 4 and belt cover layer 8 described above, and therefore the tire components of the basic structure of the tire are not limited to those described above.
In an embodiment of the present invention, the carcass cord included in the carcass layer 4 is constituted by a polyester fiber cord obtained by intertwining polyester fiber filament bundles. The elongation at break of the carcass cord (polyester fiber cord) ranges from 20% to 30% and preferably from 22% to 28%. Since a carcass cord (polyester fiber cord) having such physical properties is used for the carcass layer 4, the shock burst resistance can be improved while ensuring good steering stability similar to that of the case of using the conventional rayon fiber cord. That is, since the carcass cords have the above-described elongation properties, the rigidity of the carcass cords can be appropriately ensured and good steering stability can be exhibited. Further, since the carcass cord has the above-described elongation properties, the carcass cord easily follows local deformation, deformation during a plunger energy test (when the carcass cord is pressed by a plunger) can be sufficiently tolerated, and breakage energy can be improved. In other words, during travel, breakage durability of the tread portion against incoming protrusions is improved, and thus shock burst resistance can be improved. When the elongation at break of the carcass cord is less than 20%, the effect of improving the shock burst resistance cannot be obtained. When the elongation at break of the carcass cord is more than 30%, intermediate elongation tends to be increased, and therefore the rigidity is reduced and the steering stability possibly deteriorates.

In addition, in the carcass layer 4, the product $A = D \times Ec$ of the fineness based on corrected mass D (unit: dtex/cord) per carcass cord and the count Ec (unit: cords/50 mm) per 50 mm of carcass cord in the direction orthogonal to the extension direction of the carcass cord is from $1.8 \times 10^5$ dtex/50 mm to $3.0 \times 10^5$ dtex/50 mm, and preferably from $2.2 \times 10^5$ dtex/50 mm to $2.7 \times 10^5$ dtex/50 mm. Since the product A described above is the fineness of the carcass cord per unit width in the carcass layer 4, when it satisfies the range described above, the durability and braking performance can be improved, which is consequently advantageous for improving the shock burst resistance and the high-speed steering stability. The product A of less than $1.8 \times 10^5$ dtex/50 mm possibly deteriorates the braking performance. The product A in excess of $3.0 \times 10^5$ dtex/50 mm narrows down the interval of the carcass cord, and thus maintaining durability is difficult. Note that the individual ranges of the fineness based on corrected mass D and the count Ec described above are not particularly limited as long as the product A satisfies the range described above.

Further, the elongation under a load of 1.5 cN/dtex of the carcass cord in the sidewall portions preferably ranges from 5.5% to 8.0% and more preferably from 6.5% to 7.5%. Note that the "elongation under the load of 1.5 cN/dtex load" of the carcass cord is an elongation ratio (%) of sample cords measured under the load of 1.5 cN/dtex by conducting a tensile test in accordance with JIS L1017 "Test methods for chemical fiber tire cords" with a length of specimen between grips being 250 mm and a tensile speed being $300 \pm 20$ mm/minute. Such elongation properties are advantageous for improving the shock burst resistance while ensuring good steering stability similar to that of the case of using the conventional rayon fiber cord. When the elongation under the load of 1.5 cN/dtex is less than 5.5%, there is a possibility that cord rigidity will become high, the compression strain of the turned up end portions of the carcass layer 4 will increase immediately below a ground contact region, and consequently the cord will be broken (that is, durability is possibly impaired). When the elongation under the load of 1.5 cN/dtex is 8.0% or more, ensuring rigidity is difficult, and the effect of improving the high-speed steering stability possibly fails to be sufficiently obtained.

Furthermore, the carcass cord preferably has a heat shrinkage rate of 0.5% to 2.5% and more preferably from 1.0% to 2.0. Note that "heat shrinkage rate" is a dry heat shrinkage rate (%) of sample cords measured in accordance with JIS L1017 "Test methods for chemical fiber tire cords" with a length of specimen being 500 mm and when heated at 150°C for 30 minutes. By using cords having such a heat shrinkage rate, the reduction in durability or the deterioration in uniformity due to the occurrence of kinking (such as twisting, breakage, wrinkling, and collapsing in shape) in the cords during vulcanization can be suppressed. In this case, when the heat shrinkage rate of the cord is less than 0.5%, kinking tends to occur during vulcanization, and thus it is difficult to satisfactorily maintain durability. When the heat shrinkage rate of the cord exceeds 2.5%, uniformity may deteriorate.

Further, the carcass cord twist coefficient K represented by Formula (1) described below is preferably 2000 or more, is more preferably from 2000 to 2500, and is further preferably from 2100 to 2400. Note that the twist coefficient K is a value of the cord after dip processing. Using a cord having such a twist coefficient K achieves satisfactory cord fatigue and can ensure excellent durability. In this case, when the twist coefficient K of the cord is less than 2000, the cord fatigue deteriorates, and thus it is difficult to ensure durability.

$$K = T \times D^{1/2} \cdots (1)$$

(where T is a cable twist count of the cord (count/10 cm) and D is the total fineness of the cord (dtex))

While the carcass cord is made of the polyester fiber as described above, examples of the polyester fibers can include polyethylene terephthalate fibers (PET fibers), polyethylene naphthalate fibers (PEN fibers), polybutylene terephthalate fibers (PBT), and polybutylene naphthalate fibers (PBN), and PET fibers can be suitably used. Whichever fiber is used, the physical properties of the fiber advantageously provide high-speed durability and steering stability in a well-balanced and highly compatible manner. In particular, PET fibers, which are inexpensive, allow reduction in the cost of the pneumatic tire. In addition, workability in producing cords can be increased.

In the present invention, as the cover cord constituting the belt cover layer 8, a composite cord obtained by intertwining a yarn obtained by intertwining filament bundles of aramid fiber (aromatic polyamide fiber) and a yarn obtained by intertwining filament bundles of another organic fiber is used. Nylon fiber can be suitably used as another organic fiber. Examples of the nylon fiber include nylon 66 fiber and nylon 6 fiber. The structure of the composite cord is not particularly limited, but from the viewpoint of reducing the tire weight, in the present invention, a composite cord having a cord diameter per cord of 0.75 mm or less, preferably from 0.50 mm to 0.70 mm, is used. By using the composite cord having the sufficiently small cord diameter in this manner, the tire weight can be reduced, and the rolling resistance can be reduced. When the cord diameter of the composite cord exceeds 0.75 mm, it becomes difficult to reduce the tire weight. In particular, in order to effectively reduce the tire weight, it is preferable to use a composite cord having a two-twisted structure formed of one nylon fiber and one aramid fiber. Note that even with the two-twisted structure, the hoop effect and the cord fatigue can be sufficiently ensured as long as the structure includes the aramid fiber having a high elastic modulus and the nylon fiber having excellent fatigue resistance.

Further, in the present invention, as the composite cord constituting the belt cover layer 8, a composite cord is used that has tensile strength at break per width of 50 mm of 14 kN/50 mm or more, preferably from 14.5 kN/50 mm to 20.0 kN/50 mm, and an elastic modulus at 2 to 5% elongation per width of 50 mm of 1.7 kN/(50 mm·%) to 2.3 kN/(50 mm·%), preferably from 1.7 kN/(50 mm·%) to 2.3 kN/(50 mm·%). Furthermore, the composite cord used in the present invention is configured such that the elongation at break is preferably 7% or more and is more preferably from 8% to 12%. By using a composite cord having specific physical properties as the composite cord constituting the belt cover layer 8 as described above, it is possible to reduce rolling resistance and ensure shock burst resistance while improving steering stability during high-speed travel. When the tensile strength per width of 50 mm at break of the composite cord is less than 14 kN/50 mm, it is difficult to ensure the shock burst resistance. When the elastic modulus per width of 50 mm at 2 to 5% elongation of the composite cord is less than 1.7 kN/(50 mm·%), there is a possibility that the hoop effect as the belt cover layer 8 cannot be sufficiently ensured, and the steering stability during high-speed travel and the rolling resistance are deteriorated. When the elastic modulus per width of 50 mm at 2 to 5% elongation of the composite cord exceeds 2.3 kN/(50 mm·%), the rigidity of the belt cover layer 8 is too high, and thus it is difficult to ensure the shock burst resistance. When the elongation at break of the composite cord is less than 7%, it is difficult to ensure the shock burst resistance.

Furthermore, the composite cord used in the present invention preferably has a total fineness of 2000 dtex to 3500 dtex, more preferably from 2500 dtex to 3500 dtex, and further preferably from 2800 dtex to 3200 dtex. By setting the total fineness in this manner, it is possible to effectively exhibit the effect of the belt cover layer 8 while suppressing an increase in the tire weight due to the belt cover layer 8. When the total fineness of the hybrid cord is less than 2500 dtex, it is difficult to suppress diameter expansion and growth of the tire by the belt cover layer 8. When the total fineness of the hybrid cord exceeds 3500 dtex, there is a possibility that an increase in the tire weight due to the belt cover layer 8 becomes significant. Note that when the total fineness is set as described above, the fineness of each of the nylon fiber and the aramid fiber is not particularly limited, but the fineness ratio is preferably aramid:nylon = 50:50 to 70:30.

When such a composite cord is used as the belt cover layer 8, cord tension in a region overlapping the belt layer 7 is preferably set to 0.9 cN/dtex or more, and more preferably from 1.5 cN/dtex to 2.0 cN/dtex. Setting the in-tire cord tension in this way can reduce heat generation, and improve tire durability. When the cord tension in the region overlapping the belt layer 7 of the composite cord is less than 0.9 cN/dtex, the peak of $\tan\delta$ rises, and the effect of improving the tire durability cannot be sufficiently obtained. Note that the cord tension in the region overlapping the belt layer 7 of the composite cord constituting the belt cover layer 8 is measured at two turns or more on the inner side in the tire width direction from a terminal of the strip material constituting the belt cover layer 8.

Further, the composite cord used in the present invention preferably has a heat shrinkage stress at 150°C of 0.24 cN/tex or more. The heat shrinkage stress at 150°C is set in this way, and thus road noise can be effectively reduced while the durability of the pneumatic tire is maintained more effectively and satisfactorily. When the heat shrinkage stress at 150°C of the composite cord is 0.24 cN/tex or less, the hoop effect during travel cannot be sufficiently improved, and it is difficult to sufficiently maintain the high-speed durability. An upper limit value of the heat shrinkage stress at 150°C of the composite cord is not particularly limited, but is preferably, for example, 1.0 cN/tex. Note that in an embodiment of the present invention, the heat shrinkage stress (cN/tex) at 150°C is a heat shrinkage stress of a sample cord, which is measured when heated under the conditions of the sample length of 500 mm and the heating condition at 100°C for 5 minutes in accordance with "Test methods for chemical fiber tire cords" of JIS-L1017.

In order to obtain the composite cord having the aforementioned physical properties, for example, it is preferable to properly perform dip processing. In other words, before a calendar process, dip processing with adhesive is performed on the composite cord; however, in a normalizing process after a two-bath treatment, it is preferable that an ambient temperature be set within the range of 210°C to 250°C and cord tension be set in the range from $3.1 \times 10^{-2}$ N/tex to $9.6 \times 10^{-2}$ N/tex. Accordingly, desired physical properties as described above can be imparted to the composite cord. When the cord tension in the normalizing process is $3.1 \times 10^{-2}$ N/tex or less, the cord elastic modulus is low, and when the cord tension is $9.6 \times 10^{-2}$ N/tex or more, the cord elastic modulus is high, and thus fatigue resistance of the cords is low.

As illustrated in FIG. 1, when a region of 70% of a ground contact width W centered on a tire equator CL is a center region A and each region on an outer side thereof in the tire width direction is a shoulder region B, a ratio Ce/Sh of cord tension Ce in the tire of the cover cord disposed in the center region A and cord tension Sh in the tire of the cover cord disposed in the shoulder region B is preferably 1.0 or more and 2.0 or less. Setting the tension relationship for each portion in the tire width direction in this way can reduce heat generation and improve the tire durability. When the ratio Ce/Sh exceeds 2.0, heat generation of the cord increases and cord melting occurs when the cord tension in the shoulder region is too low, so that the high-speed durability decreases. When the ratio Ce/Sh is less than 1.0, the rigidity of the shoulder portion is excessively increased when the cord tension in the shoulder region is too high, a contact patch shape is rounded, separation between the belt layer 7 and the belt cover layer 8 is likely to progress during travel, and the tire durability is reduced. The tension Ce and the tension Sh are not particularly limited as long as the relationship described above is satisfied, but the tension Ce can be set to, for example, from 1.2 cN/dtex to 2.5 cN/dtex, and the tension Sh can be set to, for example, from 0.9 cN/dtex to 2.0 cN/dtex. Such a relationship between the tension Ce and the tension Sh can be achieved, for example, by using a curvature drum (a drum having a curvature such that a circumferential length is smaller at a portion corresponding to a shoulder portion of a tire to be manufactured than at a portion corresponding to a center portion of the tire to be manufactured) at the time of tire molding or by controlling winding tension of a belt cover material. Note that the tension Ce is a value measured at five cover cords located in the center portion of the belt layer 7 on an outermost side, and the tension Sh is a value measured at five cover cords located in the shoulder portion of the belt layer 7, on an inner side in the tire width direction by two turns or more from an end of a strip material constituting the belt cover layer, and, on an outermost side.

An embodiment of the present invention will further be described below by way of Examples, but the scope of an embodiment of the present invention is not limited to Examples.


Examples

Pneumatic tires (test tires) of Conventional Example 1, Comparative Examples 1 to 8, and Examples 1 to 6 were manufactured having a tire size of 225/60R18 and the basic structure illustrated in FIG. 1, and for each, for a carcass layer, the material of the carcass cord, the product A (= D × E) of the fineness based on corrected mass D (unit: dtex/cord) per carcass cord and the count E (unit: cords /50 mm) per 50 mm in the direction orthogonal to the extension direction of the carcass cord, and the elongation at break (unit: %) were set as in Tables 1 and 2; and for a belt cover layer, the type of composite cord, the cord diameter (unit: mm) per composite cord, the tensile strength (unit: kN/50 mm) per width of 50 mm at break of the composite cord, the elongation (unit: %) at break of the composite cord, and the elastic modulus (unit: kN/(50 mm • %) per width of 50 mm at 2 to 5% elongation of the composite cord were set as in Tables 1 and 2.

In Tables 1 and 2, the "elongation at break" of the carcass cord was measured by conducting a tensile test under conditions of a length of specimen between grips of 250 mm and a tensile speed of 300 ± 20 mm/min in accordance with JIS L1017 "Test methods for chemical fiber tire cords". Specifically, the "elongation at break" is an elongation ratio (%) of a sample cord measured at cord break. In addition, "the stress at break" of the belt cord was calculated by dividing the strength at break of the cord by the cord cross-sectional area.

In Tables 1 and 2, the column of the material of the carcass cord is indicated as "rayon" when rayon fiber cords were used and "PET" when polyethylene terephthalate fiber cords were used. In the column of the type of composite cord in Tables 1 and 2, "Cord 1" is a three-twisted composite cord (A1670 dtex/2 + N1400 dtex/1) obtained by intertwining two yarns made of aramid fiber and one yarn made of nylon fiber, and "Cord 2" is a two-twisted composite cord (A1670 dtex/1 + N1400 dtex/1) obtained by intertwining one yarn made of aramid fiber and one yarn made of nylon fiber ("A" in parentheses means aramid and "N" means nylon).

In Tables 1 and 2, the "tensile strength per width of 50 mm at break" of the composite cord is calculated by sampling a cord (sample cord) from each test tire, performing a tensile test immediately after the sampling under conditions of an initial load of 0.45 mN/dtex, a length of specimen between grips of 250 mm, and a tensile speed of 300 ± 20 mm/min, and multiplying a strength measured at break of the sample cord by the number of cords included in the tire per width of 50 mm. The "elongation at break" of the composite cord is an elongation ratio (%) of the sample cords at breaking of the cords, and was measured by conducting a tensile test in accordance with JIS L1017 "Test methods for chemical fiber tire cords" with a length of specimen between grips being 250 mm and a tensile speed being 300 ± 20 mm/minute. The "elastic modulus per width of 50 mm at 2 to 5% elongation" of the composite cord is calculated by sampling a cord (sample cord) from the tire, performing a tensile test immediately after the sampling under conditions of an initial load of 0.45 mN/dtex, a length of specimen between grips of 250 mm, and a tensile speed of 300 ± 20 mm/min, creating a graph of tensile stress against cord elongation (%), and multiplying an elastic modulus obtained from an inclination in a range of the elongation from 2 to 5% of the graph by the number of cords included in the tire per width of 50 mm.

These test tires were evaluated for shock burst resistance, low rolling resistance, and high-speed steering stability by an evaluation method described below, and the results are also shown in Table 1.


Shock burst resistance

Each of the test tires was assembled on a wheel having a rim size of 18 × 7J and inflated to an air pressure of 220 kPa. Tire breakage tests (plunger breakage tests) were performed by pressing a plunger having a plunger diameter of 19 ± 1.6 mm against a central portion of the tread at a loading speed (plunger pressing speed) of 50.0 ± 1.5 m/min in accordance with JIS K6302, and tire strength (tire breakage energy) was measured. Evaluation results are expressed by an index value with the measurement value of Conventional Example 1 as 100. Larger values indicate larger breakage energy (plunger energy) and superior shock burst resistance. Especially, the index value of "115" or more means that good performance is obtained.

Low rolling resistance

Each of the test tires was assembled on a wheel having a rim size of 18 × 7J and inflated to an air pressure of 210 kPa, then each was mounted on an indoor drum testing machine (drum diameter 1707 mm) conforming to JIS D 4230, and the resistance (rolling resistance) was measured under a test load of 4.82 kN at a speed of 80 km/h. The evaluation results were expressed as index values using the reciprocal of the measurement values, with Conventional Example 1 being assigned the index of 100. Larger index values indicate lower rolling resistance and superior low rolling resistance.

High-Speed Steering Stability

Each of the test tires was assembled on a wheel having a rim size of 18 × 7J, inflated to an air pressure of 200 kPa, and mounted on a test vehicle having an engine displacement of 2000 cc. Sensory evaluations for high-speed steering stability were performed on a test course including dry road surfaces by test drivers with two occupants riding in the vehicle. The evaluation results were rated by a 5-point method with the result of Conventional Example 1 assigned 3.0 (reference) and expressed as average points by five test drivers excluding the highest point and the lowest point. Larger evaluation values indicate superior high-speed steering stability.

Table 1

| Table 1-1 | | | | | | |
|---|---|---|---|---|---|---|
| | | | Conventional Example 1 | Comparative Example 1 | Comparative Example 2 | Example 1 |
| Carcass layer (carcass cord) | Cord material | | Rayon | Rayon | PET | PET |
| | Product A | dtex/50 mm | $2.4 \times 10^5$ | $2.4 \times 10^5$ | $2.4 \times 10^5$ | $2.4 \times 10^5$ |
| | Elongation at break | % | 13.0 | 13.0 | 25.0 | 25.0 |
| Belt cover layer (composite cord) | Type of cord | | Cord 1 | Cord 2 | Cord 1 | Cord 2 |
| | Cord diameter | mm | 0.90 | 0.65 | 0.90 | 0.65 |
| | Tensile strength | kN/50 mm | 24.0 | 15.0 | 24.0 | 15.0 |
| | Elongation at break | % | 8.0 | 7.5 | 8.0 | 7.5 |
| | Elastic modulus | kN/(50 mm·%) | 2.0 | 2.0 | 2.0 | 2.0 |
| Evaluation | Shock burst resistance | Index value | 100 | 92 | 144 | 136 |
| | Low rolling resistance | Index value | 100 | 120 | 100 | 120 |
| | High-speed steering stability | | 3.0 | 3.2 | 2.8 | 3.3 |

Table 1-2

|  |  |  | Comparative Example 3 | Example 2 | Example 3 | Comparative Example 4 |
|---|---|---|---|---|---|---|
| Carcass layer (carcass cord) | Cord material |  | PET | PET | PET | PET |
|  | Product A | dtex/50 mm | $2.4 \times 10^5$ | $2.4 \times 10^5$ | $2.4 \times 10^5$ | $2.4 \times 10^5$ |
|  | Elongation at break | % | 25.0 | 25.0 | 25.0 | 25.0 |
| Belt cover layer (composite cord) | Type of cord |  | Cord 2 | Cord 2 | Cord 2 | Cord 2 |
|  | Cord diameter | mm | 0.65 | 0.65 | 0.65 | 0.65 |
|  | Tensile strength | kN/50 mm | 15.2 | 15.1 | 14.9 | 14.8 |
|  | Elongation at break | % | 8.1 | 8.0 | 7.0 | 6.9 |
|  | Elastic modulus | kN/(50 mm·%) | 1.6 | 1.7 | 2.3 | 2.4 |
| Evaluation | Shock burst resistance | Index value | 150 | 142 | 120 | 110 |
|  | Low rolling resistance | Index value | 95 | 105 | 135 | 140 |
|  | High-speed steering stability |  | 3.0 | 3.2 | 3.3 | 3.5 |

Table 2

Table 2-1

|  |  |  | Comparative Example 5 | Example 4 | Comparative Example 6 | Comparative Example 7 |
|---|---|---|---|---|---|---|
| Carcass layer (carcass cord) | Cord material |  | PET | PET | PET | PET |
|  | Product A | dtex/50 mm | $2.4 \times 10^5$ | $2.4 \times 10^5$ | $1.5 \times 10^5$ | $2.4 \times 10^5$ |
|  | Elongation at break | % | 25.0 | 25.0 | 25.0 | 19.0 |
| Belt cover layer (composite cord) | Type of cord |  | Cord 2 | Cord 2 | Cord 2 | Cord 2 |
|  | Cord diameter | mm | 0.65 | 0.65 | 0.65 | 0.65 |
|  | Tensile strength | kN/50 mm | 13.5 | 14.0 | 15.0 | 15.0 |
|  | Elongation at break | % | 6.9 | 7.3 | 7.5 | 7.5 |
|  | Elastic modulus | kN/(50 mm·%) | 2.0 | 2.0 | 2.0 | 2.0 |
| Evaluation | Shock burst resistance | Index value | 110 | 118 | 129 | 114 |
|  | Low rolling resistance | Index value | 120 | 120 | 120 | 120 |
|  | High-speed steering stability |  | 3.3 | 3.3 | 2.7 | 3.5 |

Table 2-2

| | | | Example 5 | Example 6 | Comparative Example 8 |
|---|---|---|---|---|---|
| Carcass layer (carcass cord) | Cord material | | PET | PET | PET |
| | Product A | dtex/50 mm | $2.4 \times 10^5$ | $2.4 \times 10^5$ | $2.4 \times 10^5$ |
| | Elongation at break | % | 20.0 | 30.0 | 31.0 |
| Belt cover layer (composite cord) | Type of cord | | Cord 2 | Cord 2 | Cord 2 |
| | Cord diameter | mm | 0.65 | 0.65 | 0.65 |
| | Tensile strength | kN/50 mm | 15.0 | 15.0 | 15.0 |
| | Elongation at break | % | 7.5 | 7.5 | 7.5 |
| | Elastic modulus | kN/(50 mm·%) | 2.0 | 2.0 | 2.0 |
| Evaluation | Shock burst resistance | Index value | 118 | 154 | 158 |
| | Low rolling resistance | Index value | 120 | 120 | 120 |
| | High-speed steering stability | | 3.3 | 3.2 | 2.8 |

As can be seen from Tables 1 and 2, the tires of Examples 1 to 6, in comparison with those of Conventional Example 1, could provide reduced rolling resistance and ensured excellent shock burst resistance while improving steering stability during high-speed travel, these being provided in a well-balanced and highly compatible manner. On the other hand, in Comparative Example 1, since a cord (Cord 2) satisfying the conditions of the present invention was used as the composite cord constituting the belt cover layer while still using the carcass cord formed of the conventional rayon fiber, the elongation at break could not be ensured, and the shock burst resistance was lowered. In Comparative Example 2, although a polyethylene terephthalate fiber cord satisfying the physical properties of the present invention is used, since the composite cord constituting the belt cover layer is the conventional three-twisted cord (Cord 1), the rolling resistance could not be reduced and the high-speed steering stability deteriorated. In Comparative Example 3, since the elastic modulus per width of 50 mm at 2 to 5% elongation of the composite cord is small, the hoop effect could not be sufficiently ensured, and the high-speed steering stability and the rolling resistance were deteriorated. In Comparative Example 4, since the elastic modulus per width of 50 mm at 2 to 5% elongation of the composite cord is large, the shock burst resistance could not be sufficiently ensured. In Comparative Example 5, since the tensile strength per width of 50 mm at break of the composite cord is small, the shock burst resistance could not be sufficiently ensured. In Comparative Example 6, since the product A is small, the fineness of the carcass cord per unit width in the carcass layer could not be sufficiently ensured, and the high-speed steering stability deteriorated. In Comparative Example 7, since the elongation at break of the carcass cord is small, the shock burst resistance could not be sufficiently ensured. In Comparative Example 8, since the elongation at break of the carcass cord is large, the rigidity could not be ensured, and the high-speed steering stability deteriorated.

Reference Signs List

1 Tread portion
2 Sidewall portion
3 Bead portion
4 Carcass layer
5 Bead core
6 Bead filler
7 Belt layer
8 Belt cover layer
CL Tire equator

**Claims**

1.   A pneumatic tire comprising

a tread portion (4) extending in a tire circumferential direction and having an annular shape,
a pair of sidewall portions (2) respectively disposed on both sides of the tread portion, and
a pair of bead portions (3) each disposed on an inner side of the sidewall portions in a tire radial direction, the pneumatic tire comprising:

at least one carcass layer (4) mounted between the pair of bead portions;
a plurality of belt layers (7) disposed on an outer circumferential side of the carcass layer in the tread portion; and
a belt cover layer (8) disposed on an outer circumferential side of the belt layer,
the carcass layer being constituted by a carcass cord made of polyester fiber, **characterised in that** an elongation at break of the carcass cord is from 20% to 30%, and a product $A = D \times Ec$ of a fineness based on corrected mass D (unit: dtex/cord) per carcass cord and a count Ec (unit: cords/50 mm) of the carcass cord per 50 mm in a direction orthogonal to an extension direction of the carcass cord is from $1.8 \times 10^5$ dtex/50 mm to $3.0 \times 10^5$ dtex/50 mm, and
the belt cover layer is constituted by a composite cord obtained by intertwining a yarn made of aramid fiber and a yarn made of an other organic fiber, a cord diameter per composite cord being 0.75 mm or less, tensile strength per width of 50 mm at break of the composite cord being 14 kN/50 mm or more, and an elastic modulus per width of 50 mm at 2 to 5% elongation of the composite cord being from 1.7 kN/(50 mm·%) to 2.3 kN/(50 mm·%).

2. The pneumatic tire according to claim 1, wherein a twist coefficient K of the carcass cord represented by Formula (1) is 2000 or more,

$$K = T \times D^{1/2} \cdots (1)$$

where T is a cable twist count (turns/10 cm) of the carcass cord and D is a total fineness (dtex) of the carcass cord.

3. The pneumatic tire according to claim 1 or 2, wherein a region of 70% of a ground contact width centered on a tire equator is a center region, each region on an outer side of the center region in a tire width direction is a shoulder region, and a ratio Ce/Sh of cord tension Ce in the tire of the composite cord disposed in the center region and cord tension Sh in the tire of the composite cord disposed in the shoulder region is 1.0 or more and 2.0 or less.

4. The pneumatic tire according to any of claims 1 to 3, wherein an elongation at break of the composite cord is 7% or more.

5. The pneumatic tire according to any of claims 1 to 4, wherein the composite cord has a two-twisted structure formed of one yarn made of aramid fiber and one yarn made of nylon fiber, and a total fineness is from 2000 dtex to 3500 dtex.

**Patentansprüche**

1. Luftreifen, umfassend

einen Laufflächenabschnitt (4), der sich in einer Reifenumfangsrichtung erstreckt und eine Ringform aufweist,
ein Paar von Seitenwandabschnitten (2), die auf beiden Seiten des Laufflächenabschnitts angeordnet sind, und
ein Paar von Wulstabschnitten (3), die in einer Reifenradialrichtung jeweils auf einer Innenseite der Seitenwandabschnitte angeordnet sind, der Luftreifen umfassend:
mindestens eine Karkassenschicht (4), die zwischen dem Paar von Wulstabschnitten angebracht ist:

eine Mehrzahl von Gürtelschichten (7), die auf einer Außenumfangsseite der Karkassenschicht in dem Laufflächenabschnitt angeordnet ist; und
eine Gürteldeckschicht (8), die auf einer Außenumfangsseite der Gürtelschicht angeordnet ist,
wobei die Karkassenschicht aus einem Karkassenkordfaden aus Polyesterfaser besteht, **dadurch gekennzeichnet, dass** eine Reißdehnung des Karkassenkordfadens von 20 % bis 30 % beträgt, und ein Produkt A = D x Ec aus einer Feinheit basierend auf der korrigierten Masse D (Einheit: dtex/Kordfaden) pro Karkassenkordfaden und einer Anzahl Ec (Einheit: Kordfäden/50 mm) des Karkassenkordfadens pro 50 mm in einer Richtung senkrecht zu einer Erstreckungsrichtung des Karkassenkordfadens von 1,8 x $10^5$ dtex/50

mm bis 3,0 x 10$^5$ dtex/50 mm beträgt und

die Gürteldeckschicht aus einem Verbundwerkstoffkordfaden gebildet ist, der durch Verflechten eines Garns, der aus Aramidfaser besteht, und eines Garns, der aus einer anderen organischen Faser besteht, wobei ein Kordfadendurchmesser pro Verbundwerkstoffkordfaden 0,75 mm oder weniger beträgt, eine Zugfestigkeit pro Breite von 50 mm bei einem Reißen des Verbundwerkstoffkordfadens 14 kN/50 mm oder mehr beträgt und einen Elastizitätsmodul pro Breite von 50 mm bei 2 bis 5 % Dehnung des Verbundwerkstoffkordfadens von 1,7 kN/(50 mm-%) bis 2,3 kN/(50 mm-%) beträgt.

2. Luftreifen gemäß Anspruch 1, wobei ein Verdrehkoeffizient K des Karkassenkordfadens, der durch Formel (1) dargestellt wird, 2000 oder mehr beträgt,

$$K = T \times D^{1/2} \cdots (1)$$

wobei T eine Kabelverdrehzahl (Verdrehungen/10 cm) des Karkassenkordfadens ist und D eine Gesamtfeinheit (dtex) des Karkassenkordfadens ist.

3. Luftreifen gemäß Anspruch 1 oder 2, wobei ein Bereich von 70 % einer Bodenkontaktbreite, die auf einem Reifenäquator zentriert ist, ein Mittelbereich ist, jeder Bereich auf einer Außenseite des Mittelbereichs in Reifenbreitenrichtung ein Schulterbereich ist und ein Verhältnis Ce/Sh einer Kordfadenspannung Ce in dem Reifen des Verbundwerkstoffkordfadens, der in dem Mittelbereich angeordnet ist, und der Kordfadenspannung Sh in dem Reifen des Verbundwerkstoffkordfadens, der in dem Schulterbereich angeordnet ist, 1,0 oder mehr und 2,0 oder weniger beträgt.

4. Luftreifen gemäß einem der Ansprüche 1 bis 3, wobei eine Reißdehnung des Verbundwerkstoffkordfadens 7 % oder mehr beträgt.

5. Luftreifen nach einem der Ansprüche 1 bis 4, wobei der Verbundwerkstoffkordfaden eine zweifach verdrehte Struktur aufweist, die aus einem Garn, der aus Aramidfaser besteht, und einem Garn ausgebildet ist, der aus Nylonfaser besteht, und eine Gesamtfeinheit von 2000 dtex bis 3500 dtex beträgt.

**Revendications**

1. Pneu pneumatique comprenant

une partie de bande de roulement (4) s'étendant dans une direction circonférentielle de pneu et ayant une forme annulaire,
une paire de parties de flanc (2) disposées respectivement sur deux côtés de la partie de bande de roulement ;
une paire de parties de talon (3) disposées chacune sur un côté interne des parties de flanc dans une direction radiale de pneu, le pneu pneumatique comprenant :
au moins une couche de carcasse (4) montée entre la paire de parties de talon :

une pluralité de couches de ceinture (7) disposées sur un côté circonférentiel externe de la couche de carcasse dans la partie de bande de roulement ; et
une couche de protection de ceinture (8) disposée sur un côté circonférentiel externe de la couche de ceinture,
la couche de carcasse étant constituée d'un câblé de carcasse en fibres de polyester, **caractérisé par** un allongement à la rupture du câblé de carcasse de 20 % à 30 %, et un produit A = D x Ec d'une finesse sur la base d'une masse corrigée D (unité : dtex/câblé) par câblé de carcasse et d'un nombre Ec (unité : câblés/50 mm) du câblé de carcasse par 50 mm dans une direction orthogonale à une direction d'extension du câblé de carcasse est de 1,8 x 10$^5$ dtex/50 mm à 3,0 x 10$^5$ dtex/50 mm, et
la couche de protection de ceinture est constituée d'un câblé composite obtenu en entrelaçant un fil en fibre aramide et un fil en une autre fibre organique, un diamètre de câblé par câblé composite étant de 0,75 mm ou moins, une résistance à la traction par largeur de 50 mm à la rupture du câblé composite étant de 14 kN/50 mm ou plus, et un module d'élasticité par largeur de 50 mm à un allongement de 2 à 5 % du câblé composite étant de 1,7 kN/(50 mm-%) à 2,3 kN/(50 mm-%).

**2.** Pneu pneumatique selon la revendication 1, dans lequel le coefficient de torsion K du câblé de carcasse représenté par une Formule (1) est de 2 000 ou plus,

$$K = T \times D^{1/2} \cdots (1)$$

où T est un nombre de torsions de câblé (tours/10 cm) du câblé de carcasse et D est une finesse totale (dtex) du câblé de carcasse.

**3.** Pneu pneumatique selon la revendication 1 ou 2, dans lequel une région de 70 % d'une largeur de contact au sol centrée sur un équateur de pneu est une région centrale, chaque région sur un côté externe de la région centrale dans une direction de largeur de pneu est une région d'épaulement, et un rapport Ce/Sh entre une tension de câblé Ce dans le pneu du câblé composite disposée dans la région centrale et une tension de câblé Sh dans le pneu du câblé composite disposée dans la région d'épaulement est de 1,0 ou plus et de 2,0 ou moins.

**4.** Pneu pneumatique selon l'une quelconque des revendications 1 à 3, dans lequel l'allongement à la rupture du câblé composite est de 7 % ou plus.

**5.** Pneu pneumatique selon l'une quelconque des revendications 1 à 4, dans lequel le câblé composite a une structure à deux torsions formée d'un fil en fibre aramide et d'un fil en fibre nylon, et une finesse totale de 2 000 dtex à 3 500 dtex.

# FIG. 1

EP 4 257 371 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017031381 A
- JP 2009132329 A
- JP 2009274683 A
- JP 2019156070 A